# EUROPEAN PATENT APPLICATION

(11) **EP 4 043 276 A1**
(43) Date of publication of application: **17.08.2022**
(21) Application number: 22305144.2
(22) Date of filing: 10.02.2022
(51) Int. Cl.: B60N 2/015, B60N 2/24, B60N 2/30

(54) **SEAT ASSEMBLY FOR A PUBLIC TRANSPORT VEHICLE**

(30) Priority: 11.02.2021 IT 202100003071
(71) Applicant: IVECO FRANCE S.A.S., 69200 Vénissieux (FR)
(72) Inventor: NOVOTNY, Michal, 56601 VYSOKÉ MYTO (CZ)
(74) Representative: Faraldi, Marco

(57) **Abstract**

Seat assembly (6) for a public transport vehicle (1), comprising a support portion (7) provided with a lower portion (7b) configured to be fixed to a ground (2) and an upper portion (7a), the seat assembly (6) further comprises at least a seat (8) carried by said upper portion (7a), wherein it further comprises selective fixing means (20) configured to assume a first configuration to fix the support portion (7) to a coupling portion (15) fixedly carried by the ground (2) or a second configuration to release the support portion (7) with respect to the coupling portion (15), the seat assembly (6) comprising support means (30) configured to rotatably support the seat assembly (6) on said ground (2) when support portion (7) is not fixed to the coupling portion (15).

## Description

### CROSS-REFERENCE TO RELATED APPLICATIONS

This Patent Application claims priority from Italian Patent Application No. 102021000003071 filed on February 11, 2021.

### TECHNICAL FIELD

The present invention concerns a vehicular seat assembly, in particular a vehicular seat assembly for a public transport vehicle.

The present invention finds its preferred application, although not exclusive, in buses for transport of people.

### BACKGROUND OF THE INVENTION

Public transport vehicles, such as buses, are configured to transport a great number of passengers during their mission on seats fixed on the ground of the bus.

Clearly, the typology of passenger and their number may vary. Accordingly, it could be useful to vary the number and disposition of seats, e.g. for housing a reduced mobility person or a stroller.

However, due to their fixation, the seats cannot easily be moved or removed.

Therefore, the need is felt to provide a public transport vehicle which disposition of seats is easily reconfigurable.

An aim of the present invention is to satisfy the above mentioned needs in an optimized and cost-effective manner.

### SUMMARY OF THE INVENTION

The aforementioned aim is reached by a seat assembly and a vehicle as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is perspective rear view showing a seat assembly according to the invention;
- Figure 2 is a front sectioned and exploded view of a portion of the seat assembly of the invention;
- Figure 3 is a top schematic view of the portion of figure 2 in a first operational condition;

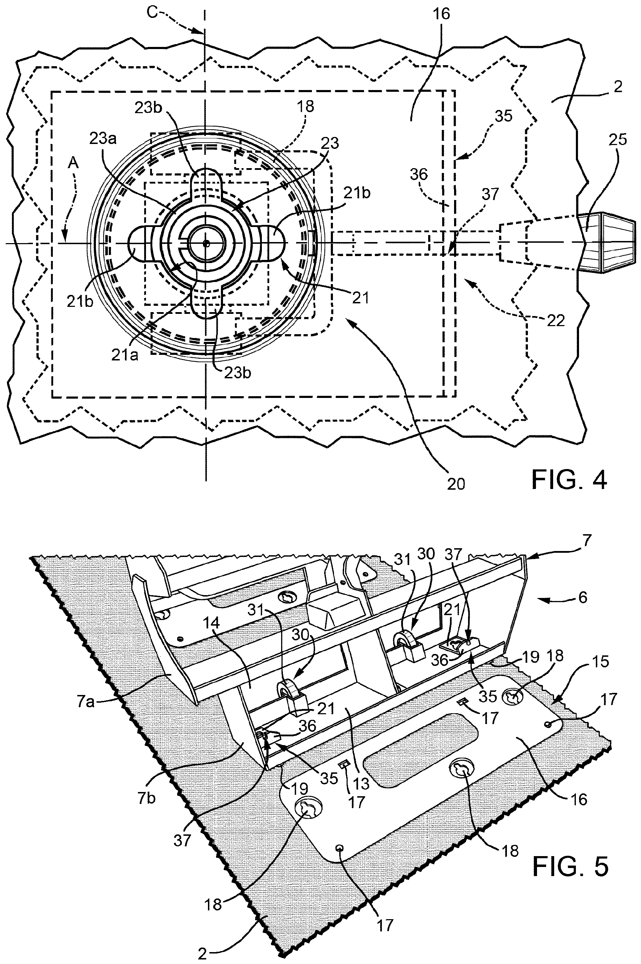

- Figure 4 is a top schematic view of the portion of figure 2 in a second operational condition;
- Figure 5 is a perspective view of a front lower portion of the seat assembly of figure 1;
- Figures 6 and 7 are a lateral schematic and sectioned view of the portion of figure 2 in further operational conditions;
- Figures 8 and 9 are lateral schematic view of the seat assembly of figure 1 in different operational conditions; and
- Figures 10 and 11 are lateral schematic views showing a vehicle comprising a plurality of seat assemblies according to the invention in different configurations.

### DETAILED DESCRIPTION OF THE INVENTION

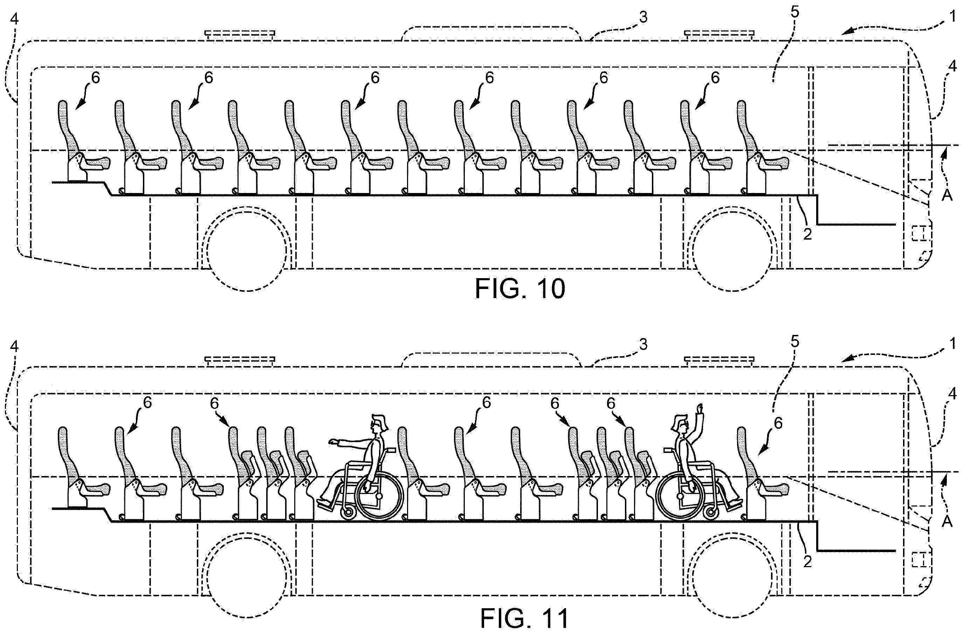

Figures 10 and 11 disclose a vehicle 1 for public transport such as a bus, provided with a plurality of walls 2, 3, 4 defining an inner space 5 for transporting passengers.

In particular, the inner space 5 is delimited vertically by a ground 2 and a ceiling 3, laterally by a side, front and rear walls 4 and extends longitudinally along a longitudinal axis A of the vehicle 1.

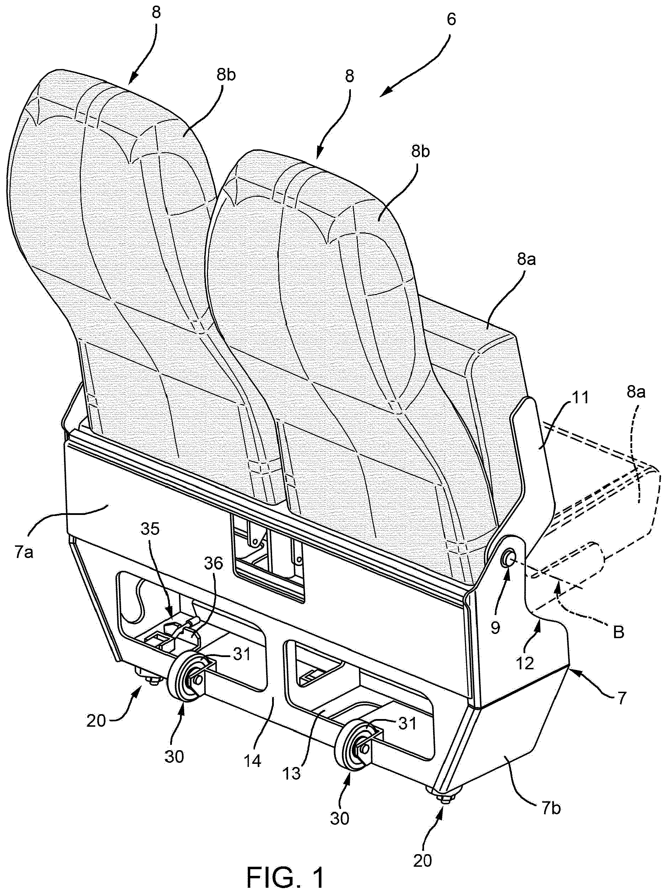

The vehicle 1 furthermore comprises at least a seat assembly 6, in the present disclosure a plurality, according to the invention and described below making reference to figure 1.

The seat assembly 6 essentially comprises a structural portion 7 that is configured to be fixed to the ground 2 of the vehicle 1 and that is configured to provide a static support to the entire assembly 6.

The structural portion 7 has a shape to accommodate at least a seat 8. In the disclosed example, the structural portion 7 has a shape to accommodate two seats 8.

Each seat 8 comprises a sitting portion 8a and a back portion 8b that are separated one with respect to the other and separately carried by the structural portion 7. In greater detail, the back portion 8b is fixedly carried by the structural portion 7 and the sitting portion 8a is carried in a movable manner by the structural portion.

In particular, the sitting portion 8a is carried by the structural portion 7 via a hinge connection 9 configured to allow the rotation of sitting portion 8a about an axis B perpendicular to axis A.

In greater detail the sitting portion 8a may assume a first operational position wherein the sitting portion 8a is faced to the back portion 8b, thereby occupying a space in longitudinal direction substantially equal to its thickness and a second operational position wherein the sitting portion 8a is substantially perpendicular to back portion 8b thereby allowing to a passenger to seat thereon.

In particular, the hinge connection 9 is achieved between a pair of lateral arms 11 provided with a first terminal portion hinged to the hinge connection 9 and a second terminal portion that is fixedly coupled to the sitting portion 8a.

The seat assembly 6 comprises stop means 12 configured to avoid a further rotation of the sitting portion 8a, in the angular direction from the fist to the second operational position, when it is in the second operational position.

In the disclosed embodiment, the stop means 12 are achieved by a mechanical contact coupling between a surface of the lateral arms 11 with the structural portion 7. Optionally, the seat assembly 6 may be provided with elastic means (not shown) to maintain the sitting portion 8b in the first operational position, i.e. to allowing the return of this latter from the second operational position when the user is not engaged on this latter.

To this aims the terminal portions of the lateral arms 11 are realized in respective segments that are inclined one with respect to the other. In particular, the surface of the arm 11 contacting the structural portion 7 allows the segment carrying the second terminal portion to be substantially parallel to the ground 2, when in its second operational position.

The sitting portion 8a and the back portion 8b may be realized in soft material, e.g. in tissue, or may be realized in rigid material, e.g. plastic.

Coming back to structural portion 7, it may be subdivided in to an upper portion 7a defining a support for seat 8 as described above and a lower portion 7b that is configured to be connected to the ground 2. Lower and upper portions 7b, 7a are preferably realized as one piece and in metal.

The top portion 7a has a shape configured to allow the connection of the at least one seat 8 as described above. The lower portion 7b comprises a base plate 13 that is configured to cooperate at contact with the ground 2 and a rear plate 14 extending in vertical direction, preferably but not necessarily perpendicularly to base plate 13. On the front, along axis A direction, the lower portion 7b is opened so as to allow the passenger to store personal effects or rest legs/feet.

In particular, the vehicle 2 is provided with a coupling portion 15 for allowing the base plate 13 to locate in a correct position on the ground 2. In greater detail, the coupling portion 15 may comprise a coupling plate 16 fixed to the ground 2.

The coupling portion 15 essentially defines a first plurality of holes 17 and a second plurality of holes 18. In particular, the first plurality of holes 17 is configured to house respective protrusions 19 carried by structural portion 7 to allows the centering of this latter on the ground.

The second plurality of holes 18, instead, is configured to house selective fixing means 20 configured to fix or release the structural portion 7 to the ground 2. In the disclosed example, the plurality of holes 17, 18 are passing through the coupling plate 16.

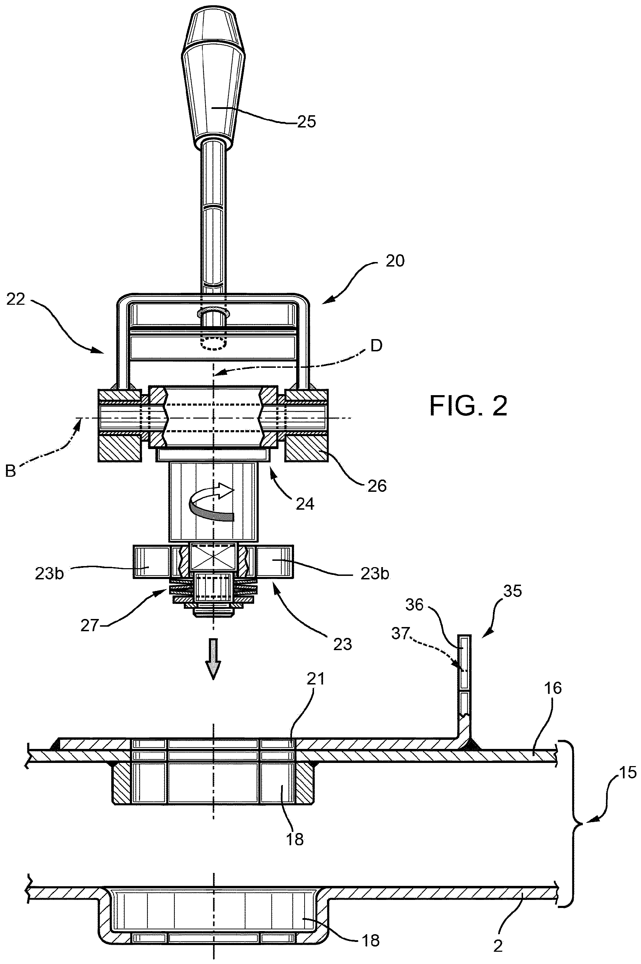

Making reference to figures 2, 3, 6 and 7 the selective fixing means 20 preferably comprises a mechanical coupler 22 configured to provide an axial load between the support structure 7 and the ground 2 thereby coupling these latter.

In greater detail, the coupling portion 15 and the base portion 13 both define an opening 21 over each hole 18 that is smaller with respect to these latter, i.e. the transversal and longitudinal dimension of the hole 18 are greater with respect to the same dimension of the opening 21.

According to the above described structure, the hole 18 realized in the ground 2 are greater with respect to openings 21 that are realized on the coupling plate 16 and the base portion 13 that, therefore, partially cover the same.

In particular, the opening 21 has a shape that extends more in a transversal direction with respect to longitudinal direction, i.e. the direction parallel to axis A. According to the described embodiment, opening 21 has a central circular portion 21a and a pair or lateral portions 21b that extends along a transversal axis C that is perpendicular to axis A.

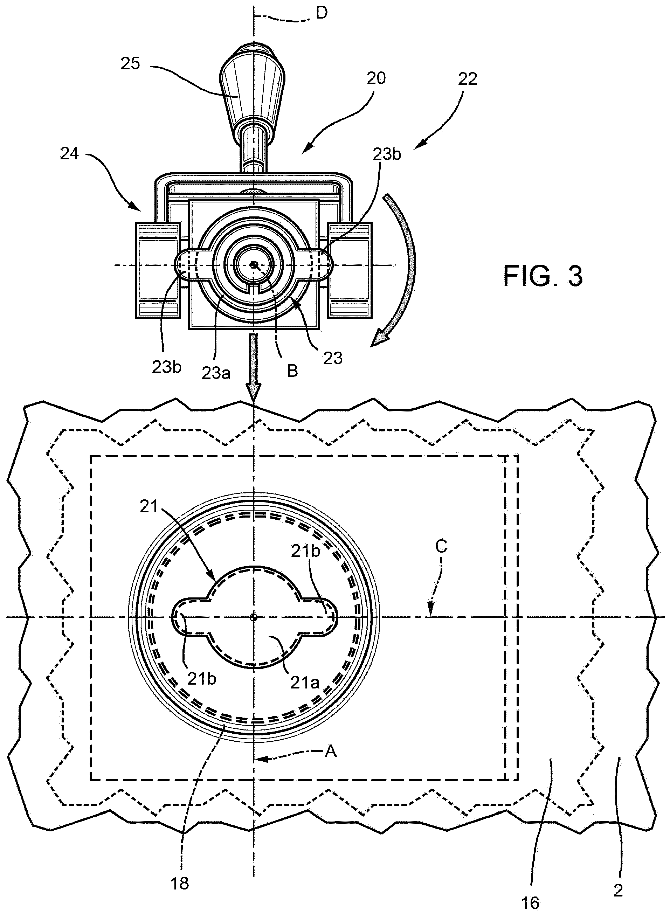

The mechanical coupler 22 is an eccentric coupler comprising a coupling portion 23, an eccentric arm 24 and a handling 25. In greater detail, the coupling portion 23 has a shape corresponding to opening 21, i.e. comprising a central portion 23 and a pair of lateral portion 21b both dimensioned to pass through opening 21. In particular, the coupling portion 23 of mechanical coupler 21 may be inserted through opening 21 inside hole 18 (see figures 2, 3) along a vertical axis D.

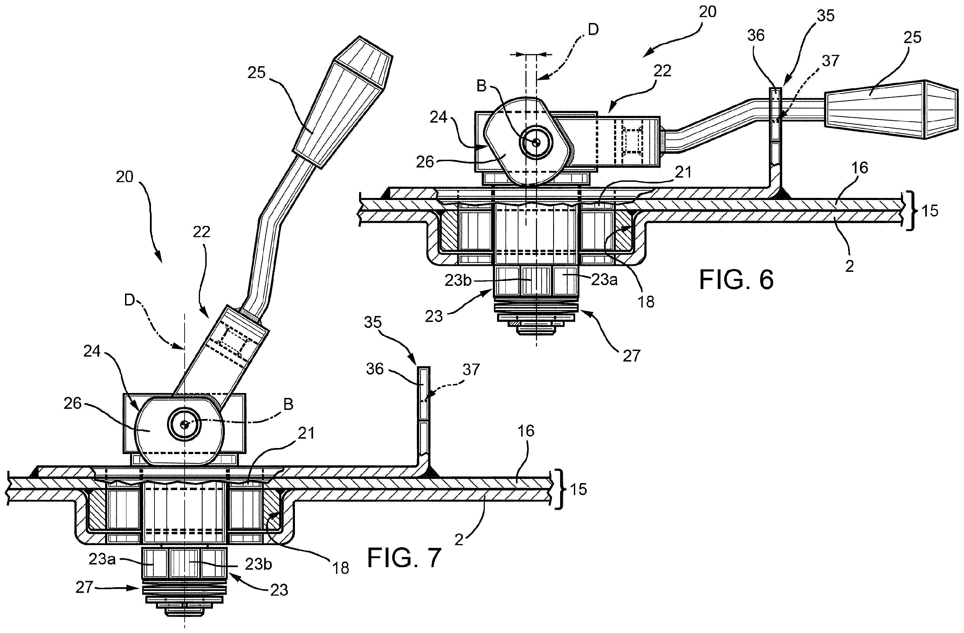

The eccentric arm 24 comprises a cam portion 26 that is hinged to handling 25 and configured to rotate about a transversal axis B, i.e. parallel to axis B of arms 11,. As shown in figures 6 and 7 the cam portion 26 is configured to rotate thereby moving axis B with respect to vertical axis D. The cam 26 is connected via hinge to coupling portion 23; accordingly, a movement of the hinge between cam 26 and handling 25 will consequently impart a movement of the coupling portion 23.

In particular, the handling 25 may assume a first operational position (figure 7) wherein the eccentric arm 24 does not move the coupling portion 23 to exert an axial load between support portion 7, i.e. wherein the axis B of the hinge between the eccentric arm 24 and the handling 25 lies on vertical axis D, and ground 2 and a second operational position (figure 6) wherein the eccentric arm 24 move coupling portion 23 to exert an axial load between support portion 7 and ground 2, i.e. wherein the axis B of the hinge between the eccentric arm 24 and the handling 25 does not lei on vertical axis D.

Preferably, mechanical coupler 21 may comprise elastic means 27 configured to resist to the force applied by eccentric arm 24 and operatively interposed between these latter and the coupling portion 23.

Seat assembly 6 advantageously further comprises support means 30 configured to allow the movement of the seat assembly 6 over ground 2 or ground surface outside vehicle 1 when disengaged from ground 2.

In particular, support means 30 may comprise a pair of rollers 31 that are hinged to lower portion 7b of support portion 7 and that are configured to rotatably support this latter on the ground 2 when not engaged to this latter and not to interfere with its coupling via fixing means 21.

In particular, rollers 31 are placed symmetrically with respect to a longitudinal axis of the seat assembly 6, i.e. an axis parallel to axis A of the vehicle and are partially housed in the rear plate 14.

Advantageously, the seat assembly 6 further comprises locking means 35 for locking the position of fixing means 20 when they fix the support portion 7 to ground 2.

According to the above disclosed embodiment of fixing means 20, the locking means 35 comprises a plate 36 that defines a seat 37 for allowing to selectively house the handling 25. In greater detail, the plate 36 extends from base portion 13, preferably vertically, over the respective opening 21 at a distance along axis A suitable for housing a portion of handling 25.

The transversal extension of seat 37 is dimensioned to allow to house handling 25 with a sufficient interference/friction to avoid unintentional disengagement of this latter from seat 37 but, at the same time, to allow the user to extract handling 25 from seat 37 if it is needed to release support portion 7 from ground 2.

The operation of the above disclosed seat assembly 6 according to the invention is the following.

Making the assumption that the vehicle 1 is in the configuration of figure 10 and that it is needed to pass in the configuration of figure 11, i.e. it is needed to remove some seat assemblies 6, the user needs to disengage seat support 7 from ground 2.

As shown in figures 6, 7, 8 and 9, the mechanical coupler 21 is in the position of figure, i.e. with the handling 25 placed in the seat 37 of the fixing means 35. In such position, the eccentric arm 24 engages cam 26 with coupling portion 15 so that a force along axis D is generated between coupler 23 and plate 16 that is fixed to ground 2. In this way, the seat support is fixed to ground 2.

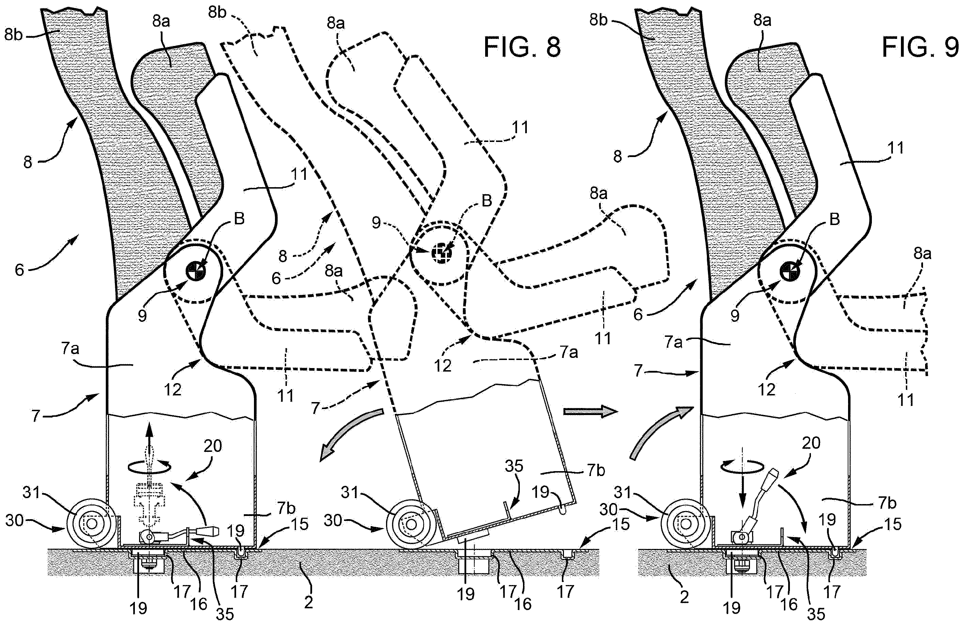

Accordingly, the user may move up handling 25 (see figures 7 and 8) thereby moving cam 26 that make axis B of the hinge between these latter, handling 25 and coupler 23 to return to lie within vertical axis D. When in such condition, there is no load between coupler 23 and plate 16. The user may therefore rotate (figure 8) the coupler 23 so that, due to its shape, may pass through opening 21. The operation is repeated for all couplers 23 that fixed the support portion 7 to ground 2.

When all couplers 23 are disengaged, the user may incline seat assembly 6 with respect to vertical axis thereby allowing the rollers 31 to slide on ground 2. In this way, the seat assembly may be moved easily on the ground to be placed in a further coupling portion 15 realized on the ground 2 or discharged from the vehicle 1.

In view of the foregoing, the advantages of the seat assembly according to the invention are apparent.

The seat assembly 6 allows to occupy a reduced space when not used thanks to the sitting portion 6b that may return to its place when not used.

The seat assembly 6 may be easily fixed or released to ground 2 in specific positions. When it is needed to transport seat assembly 6, the roller 31 allows to quick and lightly transport the seat assembly 6 on, in or out the vehicle.

Moreover, the proposed selective coupling means 20 and related fixing means 30 allows a quick and economic coupling or release of the support potion 7 on the ground 2.

It is clear that modifications can be made to the described seat assembly which do not extend beyond the scope of protection defined by the claims.

For example, the number and shape of the describe elements may vary within the limit defined by the claims.

The seat assembly may comprise a single seat 8 or the coupling portion 15 may not comprise the described plate. Similarly, fixing means 35 are optional such as the presence of rollers 31.

## Claims

1. Seat assembly (6) for a public transport vehicle (1), said seat assembly (6) comprising a support portion (7) provided with a lower portion (7b) configured to be fixed to a ground (2) of said vehicle (1) and an upper portion (7a), said seat assembly (6) further comprises at least a seat (8) carried by said support upper portion (7a) and provided with a back portion (8b) and a sitting portion (8a),
wherein said seat assembly (6) comprises selective fixing means (20) configured to assume a first configuration to fix said support portion (7) to a coupling portion (15) fixedly carried by said ground (2) or a second configuration to release the support portion (7) with respect to said coupling portion (15), said seat assembly (6) comprising support means (30) configured to rotatably support said seat assembly (6) on said ground (2) when said support portion (7) is not fixed to said coupling portion (15) ,
wherein said selective fixing means (20) comprise at least one mechanical coupler (22) configured to be inserted in a respective hole (18) realized in said ground through an opening (21) passing trough said lower portion (7b) and said coupling portion 815), said mechanical coupler (22) being configured to impart a force between said lower portion (7b) and said coupling portion (15) thereby fixing said support (7) to said ground.
wherein said mechanical coupler (22) comprises a coupling portion (23), an eccentric element (24) and a handling (25), said eccentric element (24) being hinged to said handling (25) and configured to cooperate at contact with said coupling portion (25), said coupling portion (23) being carried by said hinge, said handling (25) being configured to move between a first and a second position thereby carrying in motion said eccentric element (24) that displaces said hinge thereby moving said coupling portion (23) from a first position wherein it imparts a force between said support (7) and said coupling portion (15) and a second portion wherein it does not imparts such force.

2. Seat assembly according to claim 1, wherein said opening (21) has a shape provided with a central portion (21a) and a pair of lateral portions (21b), said coupling portion (23) having a shape corresponding to the shape of said opening (21) comprising a central portion (23a) and a pair of lateral portions (23b), said coupling portion (23) being configured to pass through said opening (21) to be inserted into said hole (18).

3. Seat assembly according to any of claims 1 or 2, wherein said coupling portion (15) defines at least a further hole (17) and said lower portion (7b) defines at least a protrusion (19), said protrusion (19) being configured to be inserted into said hole (17) to center said seat assembly (6) on said ground (2).

4. Seat assembly according to any of claims 1 to 3, wherein said coupling portion (15) comprises a coupling plate (16) fixed to said ground (2).

5. Seat assembly according to any of the preceding claims, further comprising locking means (35) configured to lock said fixing means (20) to said support (7) when they are in said first configuration.

6. Seat assembly according to claim 5 when depending on claims 4 or 5, wherein said locking means (35) comprises a plate (36) carried by said support (7) and provided with a seat (37) to house with interference said handling (25).

7. Seat assembly according to any of the preceding claims, wherein said sitting portion (8a) is carried in a movable manner by said support portion (7).

8. Seat assembly according to claim 7, wherein said sitting portion (8a) is hinged to said support portion (7), said seat assembly (6) comprising stop means (12) configured to limit the rotation of said sitting portion (8a)

9. Seat assembly according to any of the preceding claims, wherein said support means (30) comprises a pair of rollers (31) hinged to said support portion (7).

10. Vehicle (1) comprising at least a seat assembly (6) according to any of the preceding claims.
